# EUROPÄISCHE PATENTSCHRIFT

(11) **EP 3 482 822 B1**
(45) Veröffentlichungstag und Bekanntmachung des Hinweises auf die Patenterteilung: **20.05.2020**
(21) Anmeldenummer: 18205100.3
(22) Anmeldetag: 08.11.2018
(51) Int. Cl.: B01F 9/00, B01F 13/08, G01N 1/38

(54) **RÜHRVORRICHTUNG, RÜHRSYSTEM UND RÜHRVERFAHREN**
AGITATION DEVICE, AGITATION SYSTEM AND METHOD FOR AGITATION
DISPOSITIF D'AGITATION, SYSTÈME D'AGITATION ET PROCÉDÉ D'AGITATION

(30) Priorität: 08.11.2017 DE 202017106756 U
(43) Veröffentlichungstag der Anmeldung: 15.05.2019
(73) Patentinhaber: MWT Mikrowellen Labor Technik AG, 9435 Heerbrugg (CH)
(72) Erfinder: Lautenschläger, Werner, 9435 Heerbrugg (CH); Lautenschläger, Jens, 9435 Heerbrugg (CH)
(74) Vertreter: Kiwit, Benedikt

(56) Entgegenhaltungen:
- EP-A2- 0 965 380
- DE-A1- 19 543 401
- US-A- 4 465 377

## Beschreibung

Die vorliegende Erfindung betrifft eine Vorrichtung zur Erzeugung einer Antriebskraft zum Rühren von Proben in einem Probenbehälter, ein System aufweisend eine derartige Vorrichtung und ein Betriebsgerät, sowie ein Verfahren zum Rühren von Proben in Probenbehältern mittels des vorgenannten Systems.

Aus dem Stand der Technik, wie beispielsweise der DE 10 2010 030 287, sind Druckbehälter bekannt, in denen mittels Mikrowellenstrahlung eine Flüssigkeitsprobe im Inneren des Druckbehälters erwärmt wird. In dem vorgenannten Druckbehälter ist ein mechanischer Rührer vorgesehen, welcher in die Flüssigkeitsprobe hineinragt, um diese zur Einstellung einer gleichmäßigen Temperatur zu durchmischen.

Ein derartiger Druckbehälter ist jedoch in der Breite der labortechnischen Anwendungen eingeschränkt. So ist die Anzahl unterschiedlicher Proben, die gleichzeitig in dem Druckbehälter gerührt werden können, limitiert, da in dem Druckbehälter lediglich ein einzelnes Aufnahmebehältnis -der Behälter- sowie ein einzelner Rührer vorgesehen sind. Ferner kann der Fall eintreten, dass das bereitgestellte Fassungsvermögen des Druckbehälters im Vergleich zu dem Volumen der zu rührenden Probe überdimensioniert ist. Dies ist insbesondere der Fall, wenn lediglich eine kleine Menge an Probenflüssigkeit in dem Druckbehältnis gerührt werden soll. Hierbei besteht die Gefahr, dass der Rührer nicht weit genug in die Probe hineinragt, wodurch ein Rühren der Probe nicht mehr möglich ist.

Ferner sind aus dem Stand der Technik auch Vorrichtungen mit Druckbehälter und integriertem Magnetrührer bekannt. Ein Magnetrührer ist ein elektrisches Gerät mit einer Platte, unter der ein integriert bereitgestellter Magnet mit regelbarer Geschwindigkeit rotiert. Der Magnetrührer ist unterhalb des Druckbehälters fest in der Vorrichtung vorgesehen oder in einem Bodenbereich des Druckbehälters integriert angeordnet, um so einen meist stabförmigen Magneten im Inneren von Probe aufweisenden Probenbehältern in dem Druckbehälter zum Rühren der Probe anzutreiben. In der Laborpraxis hat sich jedoch eine derartige integrierte Bauform insbesondere dann als nachteilig erwiesen, wenn ein Rühren der Probe eigentlich nicht erforderlich ist.

EP0965380A2 offenbart eine Vorrichtung zur Erzeugung einer Antriebskraft in Proben mit einem magnetischen Rührelement.

US4465377A1 offenbart ein Stabelement mit einem magnetischen Rührelement in einer Probe. Gerade im experimentellen Laborbetrieb von Wissenschaft und Forschung besteht jedoch das Bedürfnis, durch die Bereitstellung eines einzelnen Apparates möglichst viele experimentelle Anwendungsfälle abzudecken. Dies reicht von der Verarbeitung relativ geringer Mengen an Probe bis zur Herstellung größerer Volumina. Ferner gilt es, den Platzbedarf eines derartigen Apparates trotz der Bereitstellung erhöhter Funktionalität nicht zu erweitern.

Es ist somit eine Aufgabe der vorliegenden Erfindung, eine Vorrichtung, ein Verfahren und ein System bereitzustellen, mit denen eine Vielzahl unterschiedlicher Proben gleichzeitig gerührt werden können. Ferner soll es ermöglicht werden, Proben mit unterschiedlichen Volumina gleichzeitig in eine Rührbewegung zu versetzen. Zudem soll durch die Erfindung ein einfaches Hantieren und Manipulieren der Proben zu jedem Zeitpunkt des Rührvorgangs, d.h. vor, während und nach dem Rühren, ermöglicht werden. Der bereits zur Verfügung stehende Bauraum existierender Rührvorrichtungen soll dabei möglichst optimal ausgenutzt werden.

Diese Aufgabe wird durch den Gegenstand der unabhängigen Ansprüche gelöst. Die abhängigen Ansprüche bilden den zentralen Gedanken der vorliegenden Erfindung in besonders vorteilhafter Weise weiter.

Ein erster Aspekt der vorliegenden Erfindung betrifft eine Vorrichtung zur Erzeugung einer Antriebskraft zum Rühren von Proben, insbesondere von Proben für den Laborbetrieb, gemäß dem Anspruch 1. Als "Probe" kommen dabei alle rührfähigen Arten von Proben in Betracht. Lediglich als Beispiel seien hier Flüssigkeiten, Flüssigkeiten mit darin enthaltenen Feststoffproben oder Feststoffproben (bspw. Mischungen z.B. in Pulverform) für den Laborbetrieb genannt. Als "Flüssigkeit" wird dabei Materie in ihrem flüssigen bzw. einem fließfähigen Aggregatzustand bezeichnet. Ferner wird unter "Rühren" oder einem "Rührvorgang" jegliche Anregung der Bestandteile einer Probe verstanden, um insbesondere durch Mischen eine möglichst homogene Verteilung der Bestandteile zu erzielen. Dies kann beispielsweise durch Anregung der Bestandteile der Probe zu einer im Wesentlichen kreisförmigen bzw. kreisenden Bewegung erzielt werden.

Die Vorrichtung weist eine Probenhalterung zur Aufnahme von wenigstens einem Probenbehälter für Proben auf. Gemäß der Erfindung wird dabei unter einem Probenbehälter ein für die Aufnahme der Probe und den durchzuführenden chemischen Prozess geeignetes Gefäß oder geeigneter Container verstanden, wie bspw. ein Reagenzglas. Die Probenhalterung erlaubt es, den Probenbehälter in seiner Position geeignet festzuhalten; bevorzugt in einer im Wesentlichen aufrechten Position mit nach oben weisender Öffnung.

Des Weiteren weist die Vorrichtung ein Stabelement auf, welches sich entlang einer Längsachse erstreckt und mit der Probenhalterung verbunden ist. Gemäß der Erfindung wird dabei unter einem "Stabelement" ein längliches Element verstanden, dessen Längserstreckung im Wesentlichen entlang einer Achse (Längsachse) ausgebildet ist und welches bevorzugt im Querschnitt symmetrisch, bspw. im Wesentlichen rund, ausgebildet ist.

Das Stabelement weist einen Kopplungsabschnitt zum lösbaren Koppeln des Stabelementes mit einer Betriebseinheit auf. Der Kopplungsabschnitt kann bspw. für eine mechanische und/oder magnetische Kopplung ausgebildet sein. Als Betriebseinheit wird gemäß der Erfindung jedes Gerät oder jede Vorrichtung verstanden, mit dem/der die Vorrichtung derart betrieben werden kann, dass mittels der Vorrichtung eine Antriebskraft zum Rühren von Proben erzeugt wird.

Das Stabelement weist ferner einen Befestigungsabschnitt auf. Der Befestigungsabschnitt ist dabei zur Befestigung der Probenhalterung an dem Stabelement vorgesehen, um so die Probenhalterung entlang der Längsachse des Stabelements - also axial - definiert zu positionieren.

Ferner weist das Stabelement einen magnetischen Rührabschnitt auf. Das Stabelement ist dabei derart ausgebildet, dass mittels des magnetischen Rührabschnittes ein relativ zur Probenhalterung um die Längsachse herum rotierendes Magnetfeld erzeugt werden kann. Gemäß der Erfindung wird unter einem "rotierenden Magnetfeld" ein Magnetfeld verstanden, dessen Pole eine um eine Rotationsachse im Wesentlichen kreisende Bewegung durchlaufen. Mit anderen Worten ausgedrückt: Mit einer derartigen Vorrichtung kann lokal ein sich zeitlich (bspw. sinusförmig) änderndes Magnetfeld gemessen werden, dessen zeitlicher Verlauf als Funktion einer Rotation des Stabelementes in Relation zu der Probenhalterung beschreibbar ist.

Durch die Vorrichtung wird es somit möglich, an einer Stelle über der Zeit Änderungen in der Orientierung und Stärke des Magnetfeldes im Bereich um den magnetischen Rührabschnitt zu erzeugen; genauer gesagt können an einer Stelle über der Zeit (bspw. mit sinusförmigen Verlauf) ständig wechselnde Pole bereitgestellt werden. Dadurch kann eine für das Rühren notwendige Kraft mittels eines zeitlich veränderlichen Magnetfeldes bereitgestellt werden. Da die Probenhalterung mit dem Stabelement verbunden ist, wird dieses Magnetfeld zugleich in relativer Nähe zu der Probenhalterung bereitgestellt und dieses kann daher auch für die Probenbehälter genutzt werden. Die Bereitstellung der notwendigen Kraft für den Rührvorgang erfolgt dabei über eine Wechselwirkung mit dem Magnetfeld und somit kontaktlos. Folglich müssen zwischen dem magnetischen Rührabschnitt und den einzelnen Probenbehältern keine Strukturen zur Kraftübertragung vorgesehen werden. Auf diese Weise kann eine Antriebskraft bereitgestellt werden, welche, wie im Weiteren beschrieben, bei Bedarf durch Interaktion mit weiteren Teilen zum Rühren genutzt werden kann. Sofern kein Rühren oder nur temporär kein Rühren gewünscht ist, kann auf diese weiteren Teile nach Belieben verzichtet werden. Die Erfindung stellt somit insbesondere die Bereitstellung der Antriebskraft und somit die Möglichkeit zur Nutzung derselben bereit.

Gemäß einer bevorzugten Weiterbildung der Vorrichtung ist die Probenhalterung mit dem Stabelement lösbar verbunden. Unter einer "lösbaren Verbindung" wird dabei insbesondere eine Verbindung verstanden, bei der die entsprechenden Bauteile beliebig oft zerstörungsfrei wieder gelöst werden können. Dadurch wird es möglich, die Probenbehälter erst in die Probenhalterung einzusetzen und im Anschluss mit dem Stabelement zu verbinden; oder umgekehrt. Dies führt insbesondere zu einer Erleichterung bei der Erledigung routinemäßiger Labortätigkeiten, wie beispielsweise die Vorbereitung und das Einlegen von Probenbehältern. Zudem können die einzelnen Bauteile nach Benutzung in einfacher Weise gereinigt oder bei auftretenden Defekten einfach ausgetauscht werden. Ferner kann das Stabelement mit unterschiedlichen Probenhalterungen beispielsweise zur Aufnahme einer unterschiedlichen Anzahl und/oder unterschiedlich gestalteter Probenbehälter kombiniert werden.

In einer vorteilhaften Ausgestaltung der Erfindung ist die Probenhalterung mit dem Stabelement koaxial verbunden. Dabei wird gemäß der Erfindung unter einer "koaxialen Verbindung" eine Verbindung verstanden, bei der die beiden Bauteile hinsichtlich einer eigenen Körperachse zueinander ausgerichtet sind, wobei beide Bauteile hinsichtlich der ausgewählten Körperachse bevorzugt mittig miteinander verbunden sind. Dadurch wird es möglich, dass das rotierende magnetische Feld möglichst gleichmäßig an jeder Stelle der Probenhalterung genutzt werden kann.

Bevorzugt ist die Probenhalterung in Richtung der Längsachse gesehen punktsymmetrisch oder zyklisch symmetrisch ausgebildet. Die Probenhalterung kann dabei definierte Aufnahmebereiche zur Aufnahme der Probenbehälter aufweisen. Die Aufnahmebereiche sind in dem verbundenen Zustand von Stabelement und Probenhalterung bevorzugt um die Längsachse verteilt, besonders bevorzugt gleichmäßig verteilt, angeordnet. Durch eine derartige Konstruktion kann der Bauraum für die Vorrichtung optimiert werden.

Der Befestigungsabschnitt kann insbesondere derart ausgebildet sein, dass das Stabelement um die Längsachse herum relativ zur Probenhalterung rotierbar gelagert ist. Gemäß der Erfindung wird unter einer "rotierbaren Lagerung" eine Lagerung verstanden, die wenigstens eine rotatorischen Bewegung um eine Achse - hier um die Längsachse - erlaubt. Es ist somit denkbar, dass durch die rotatorische Lagerung auch weitere Bewegungsfreiheiten, wie beispielsweise eine axiale Bewegung, zugelassen und ermöglicht werden. Mit einer derartigen Lagerung kann folglich das Stabelement um seine Längsachse und bezüglich der Probenhalterung rotiert werden. Eine radiale Lagerung ist bevorzugt.

Ferner kann der Befestigungsabschnitt durch einen gestuften Abschnitt des Stabelementes gebildet sein, wobei die Probenhalterung axial auf einer radialen Stufe des gestuften Abschnitts aufliegt und vorzugsweise rotierbar gelagert ist. Eine derartige Anordnung erlaubt es, die Probenhalterung entlang der Längsachse bezüglich des Stabelements in eine Richtung hin festzulegen. Zugleich wird die Drehbarkeit des Drehelementes zur Probenhalterung aufrechterhalten. Dadurch kann die Probenhalterung mit einfachen konstruktiven Mitteln an dem Drehelement lösbar befestigt und rotierbar gelagert werden.

Der magnetische Rührabschnitt kann durch einen elektrischen Magneten gebildet sein. Gemäß dieser Ausgestaltung ist es möglich, das rotierende Magnetfeld entweder durch eine Rotation des Magnetfeldes durch entsprechende Steuerung des Stromflusses in Spulen hervorzurufen, wobei in diesem Fall das Stabelement nicht rotiert werden muss. Folglich kann erreicht werden, dass eine Relativbewegung beider Bauteile vermieden werden kann und somit ein deutlich reduzierter Verschleiß der Bauteile erreicht werden kann. Zugleich kann die Ansteuerung der Spulen durch einen einfachen elektronischen Schaltkreis bewirkt werden.

Alternativ oder ergänzend kann der Rührabschnitt auch durch einen (Permanent-)Magnet, insbesondere einen Stabmagneten bzw. einen Drehmagneten, der zwei Magnetpole aufweist, gebildet sein, wobei die Magnetpole sich bevorzugt bzgl. der Längsachse einander gegenüber radial erstrecken. Das rotierende Magnetfeld kann in diesem Fall durch relative Rotation des magnetischen Rührabschnittes, bspw. eines zweipoligen Magneten desselben, zu der Probenhalterung bzw. den Probenbehältern erzeugt werden; bspw. durch Rotation des Stabelements. Dies erlaubt es, bestehende Rührsysteme mit einem mechanischen Antriebssystem mit einer derartigen vorteilhaften Vorrichtung kombinieren zu können. Durch Rotation des Stabelements bzgl. der Probenhalterung kann der magnetische Rührabschnitt bevorzugt als Drehmagnet bereitgestellt sein, um das rotierende Magnetfeld zu erzeugen.

Bevorzugt erstreckt der magnetische Rührabschnitt sich wenigstens teilweise radial innerhalb oder außerhalb der Probenhalterung oder wenigstens teilweise axial unterhalb der Probenhalterung. Da die Stärke des Magnetfelds mit zunehmendem Abstand abnimmt, tritt durch eine derartige Anordnung das Magnetfeld in dem besonders vorteilhaften Bereich um die und innerhalb der Probenhalterung auf, so dass eine Antriebskraft an geeigneter Stelle zur Verfügung gestellt werden kann.

Das Stabelement kann zudem einen mechanischen Rührabschnitt aufweisen, welcher sich radial bzgl. der Längsachse erstreckt, wobei der mechanische Rührabschnitt bevorzugt durch den magnetischen Rührabschnitt gebildet ist. Somit wird es möglich, neben einer magnetischen Antriebskraft für den Rührvorgang auch eine mechanische Antriebskraft bereitzustellen. Dies ist insbesondere bei einem um die Längsachse rotierenden Stabelement von Vorteil, der zugleich auch den Antrieb des mechanischen Rührabschnitts bereitstellt. Durch Ausbildung des magnetischen Rührabschnitts in Form eines zugleich mechanischen Rührabschnittes kann eine integral bereitgestellte zweifache Rührfunktion mit diesem Stababschnitt bereitgestellt werden.

Der Kopplungsabschnitt weist bevorzugt einen Kopplungspartner einer mechanischen und/oder einer magnetischen Kopplung zu einer Betriebseinheit auf. Gemäß der Erfindung wird dabei unter einem "Kopplungspartner" eines von Stück oder Gegenstück einer Kopplung zwischen zwei Bauteilen verstanden. Durch eine derartige Ausgestaltung wird eine einfache Anschlussmöglichkeit des Stabelementes an eine Betriebseinheit zur Verfügung gestellt. Eine mechanische Kopplung kann bspw. über eine Schraub- oder Bajonettverbindung bereitgestellt werden.

Der Kopplungsabschnitt, der Befestigungsabschnitt und der magnetische Rührabschnitt sind in einer bevorzugten Ausgestaltung der Erfindung in dieser Reihenfolge entlang der Längsachse des Stabelements angeordnet. Besonders bevorzugt schließen sich die jeweiligen Abschnitte direkt aneinander an. Die drei genannten Abschnitte des Stabelementes können in der vorbeschriebenen oder auch einer anderen Reihenfolge bevorzugt integral miteinander ausgebildet sein. Durch eine derartige Anordnung bzw. Ausbildung kann erreicht werden, dass das Stabelement einfach zu fertigen und an andere Rührwerke angeschlossen werden kann, da viele mechanische Rührstäbe an einem ihrer Enden eine Anschlussmöglichkeit an eine Antriebseinheit aufweisen und an ihrem anderen Ende ein propellerartiges Rührelement zum Rühren besitzen.

Die Vorrichtung kann gemäß einer vorteilhaften Weiterbildung der Erfindung zudem einen Behälter mit einem Aufnahmeraum zur Aufnahme der Probenhalterung (samt Probenbehälter) aufweisen. Somit wird es möglich, zusätzlich zu den Proben in den Probebehältern der Probehalterung eine weitere Probe (bspw. eine Flüssigkeit) in dem Aufnahmeraum des Behälters zu verarbeiten. Bevorzugt weist der Behälter eine Koppelöffnung zum Einkoppeln von Mikrowellen in den Aufnahmeraum auf. Zum Erhitzen ist es grundsätzlich auch denkbar, einen Heizstab zu verwenden, welcher in den Aufnahmeraum hineinragt. Somit wird eine Heizfunktion zum Erhitzen der Proben bereitgestellt. Ferner kann die Vorrichtung gemäß der Erfindung einen Deckel zum Verschließen, vorzugsweise zum druckdichten Verschließen, des Aufnahmeraumes aufweisen. Folglich kann mit der Vorrichtung eine Druckreaktion durchgeführt werden. Die Bereitstellung eines geschlossenen Aufnahmeraumes sorgt dabei zu einem Schutz vor den Proben nach außen.

Die Probenhalterung kann bzgl. der Längsachse rotatorisch fixiert sein oder auch derart ausgebildet sein, dass sie sich bzgl. der Längsachse mit einer anderen Geschwindigkeit und vorzugsweise langsamer als das rotierende Magnetfeld, besonders bevorzugt als der rotierende Drehmagnet, dreht. Somit kann erreicht werden, dass ein rotierendes Magnetfeld wirkungsvoll auf die Probenhalterung bzw. die Probenbehälter wirken kann. Die Vorrichtung gemäß der Erfindung kann ferner ein Blockierteil aufweisen, welches mit einem Blockierbereich der Probenhalterung derart zusammenwirkt, dass die Probenhalterung bzgl. der Längsachse rotatorisch fixiert ist/wird. Der Blockierbereich kann bevorzugt als eine Blockierstruktur ausgeführt sein, welche mit dem Blockierteil insbesondere formschlüssig wenigstens in Umfangsrichtung um die Längsachse bzw. Rotationsachse gesehen zusammenwirkt. Ist ein Behälter bereitgestellt, kann dieser bevorzugt mit dem Blockierteil zusammen ausgebildet sein. Besonders bevorzugt ist der Behälter dann integral mit dem Blockierteil ausgebildet. Durch die Bereitstellung eines Blockierteils wird es somit möglich, ein Verdrehen oder Schleifen der Probenhalterung für den Fall zu verhindern, in dem das Stabelement zur Erzeugung eines rotierenden Magnetfeldes relativ zur Probenhalterung um seine Längsachse rotiert wird. Ferner kann die Position der Probenhalterung bezüglich des Behälters festgelegt werden.

Die Vorrichtung gemäß der Erfindung kann ferner wenigstens einen Probenbehälter aufweisen, in dem wenigstens ein Rührelement, vorzugsweise ein magnetisches Rührelement und besonders bevorzugt ein Rührfisch, angeordnet ist, das mittels des rotierenden Magnetfeldes des magnetischen Rührabschnitts in Rotation versetzbar ist. Gemäß der Erfindung wird dabei unter einem "Rührelement" ein Element verstanden, mit dem eine Rührbewegung auf die Probe übertragen werden kann. Ein "Rührfisch" ist dabei ein meist stabförmiger Magnet, welcher häufig mit Kunststoff wie PTFE oder Glas ummantelt ist, um eine geringe Reibung zu erreichen und ihn chemisch inert bereitzustellen. Das Rührelement ist bevorzugt so ausgebildet, dass es durch das rotierende Magnetfeld angeregt eine Rührbewegung ausführt. Wird also ein magnetisches Rührelement - wie ein Rührfisch - verwendet, so können die durch das rotierende Magnetfeld auf die Pole des magnetischen Rührelements hervorgerufenen Kräfte genutzt werden, um das Rührelement zu einer Drehbewegung zu veranlassen. Da die Änderung des Magnetfeldes über den gesamten von dem magnetischen Rührabschnitt überstrichenen Bereich wirksam ist, kann somit auch eine Antriebskraft zum Rühren für eine Vielzahl von Probenbehältern bereitgestellt werden.

Gemäß einem weiteren Aspekt der Erfindung wird ferner ein System gemäß dem Anspruch 10 bereitgestellt, welches eine Betriebseinheit sowie eine erfindungsgemäße Vorrichtung der vorbeschriebenen Art aufweist. Die Vorrichtung ist dabei mit der Betriebseinheit über den Kopplungsabschnitt lösbar gekoppelt. Bevorzugt kann - soweit vorhanden - der Deckel zusammen mit der Betriebseinheit ausgebildet sein. So kann durch das erfindungsgemäße System eine betriebsbereite Einheit zur Bewirkung des Rührvorgangs bereitgestellt werden. Aufgrund der Lösbarkeit der Kopplung zwischen der Betriebseinheit und der Vorrichtung wird die Transportierbarkeit der Vorrichtung, Wartung und Austausch der entsprechenden Baugruppen erleichtert. Ebenso kann ein Kit an Vorrichtungen bereitgestellt werden, welche sich mit der Betriebseinheit koppeln lassen, wodurch der Einsatzbereich des erfindungsgemäßen System vergrößert wird und sich auf die individuellen Anforderungen bspw. bedingt durch die zu behandelnden Proben anpassen lässt.

Gemäß einer vorteilhaften Weiterbildung weist das System ferner einen Thermofühler zur Temperaturerfassung in den Probenbehältern oder in dem Behälter auf. Der Thermofühler besitzt bevorzugt eine langgestreckte, stabförmige Form. Bevorzugt wird das Blockierteil durch den Thermofühler gebildet, indem dieser in Umfangsrichtung um die Längsachse herum betrachtet mit einer den Blockierbereich bildenden Ausnehmung des Probenbehälters eine formschlüssige Verbindung bildet. Der Thermofühler kann dabei in den Behälter hineinragen und kann ferner bevorzugt mit dem Deckel verbunden sein.

Mit dem Thermofühler wird eine kontrollierte Erwärmung der Probe in dem Behältnis sowie in den Probenbehältern ermöglicht. Dies ist insbesondere von Vorteil, wenn die Proben spezielle Temperaturkurven durchlaufen sollen oder bestimmte Temperaturen nicht unter- oder überschritten werden sollen. Ferner wird mit dem vorgestellten Aufbau die Blockierfunktion in besonders vorteilhafter Weise bereitgestellt, da keine weiteren Strukturen an der Behälterwand oder weitere Bauteile bereitgestellt werden müssen.

In dem System kann ferner eine Antriebseinheit vorgesehen werden, mittels der der Deckel relativ zum Behälter teil- oder vollautomatisiert bewegbar ist, um so den Behälter wahlweise zu öffnen oder mit dem Deckel zu verschließen. Dadurch wird es möglich, die Handhabung, Bedienung und Überwachung des Systems automatisiert ablaufen zu lassen. Dies ist beispielsweise von Vorteil, wenn die Proben nach dem Durchlaufen entsprechender Prozesskurven in dem Druckbehälter zum Abkühlen automatisch aus dem Behälter gehoben werden sollen, so dass eine Benutzung des Systems auch in Abwesenheit von Laborpersonal ausgeführt werden kann.

Ferner kann das System eine Heizvorrichtung, wie einen Heizstab oder ein Magnetron, aufweisen, um die Proben zu erwärmen. Ersteres kann mit dem Deckel zusammen ausgebildet sein, um sich in den Behälter hinein zu erstrecken. Letzteres kann derart bereitgestellt sein, um Mikrowellen über die Koppelöffnung in den Aufnahmeraum einzubringen.

Das System kann ferner eine Steuereinheit aufweisen, welche die Betriebseinheit und bevorzugt ferner die Antriebseinheit sowie die Heizvorrichtung steuert.

Ein dritter Aspekt der vorliegenden Erfindung betrifft ein Verfahren zum Rühren von Proben in Probenbehältern, insbesondere Proben für den Laborbetrieb wie bspw. Flüssigkeiten, Flüssigkeiten mit darin enthaltenen Feststoffproben oder Feststoffproben. Das Verfahren gemäß Anspruch 13 weist wenigstens die folgenden Schritte auf:
- Bereitstellen eines erfindungsgemäßen Systems,
- Einsetzen von wenigstens einem (oder mehreren) eine Probe aufweisenden Probenbehälter(n) in die Probenhalterung, wobei in wenigstens einem der Probenbehälter ein Rührelement angeordnet ist, und
- Erzeugen eines relativ zur Probenhalterung um die Längsachse herum rotierenden Magnetfelds mittels des magnetischen Rührabschnitts, um das (die) Rührelement() in dem (den) Probenbehälter(n) in Rotation zu versetzen.

Ferner kann die Vorrichtung (oder wenigstens die Probenhalterung) vor der Erzeugung des rotierenden Magnetfeldes in den Aufnahmeraum des Behälters aufgenommen werden. Dabei wird bevorzugt der Aufnahmeraum mittels des Deckels bevorzugt druckdicht verschlossen. Dies bspw. mittels der Antriebseinheit.

Gemäß einer vorteilhaften Ausgestaltung wird das Stabelement relativ zur Probenhalterung um die Längsachse herum rotiert. Dabei kann zudem die Probenhalterung gleichzeitig mittels des Blockierbereiches bzgl. der Längsachse rotatorisch fixiert sein. Zudem kann in den Behälter - bevorzugt vor der Aufnahme der Vorrichtung in den Aufnahmeraum - ferner eine Ladeflüssigkeit eingefüllt werden, in welche die Probenbehälter wenigstens teilweise hineinragen. Vorzugsweise ist der mechanische Rührabschnitt dabei in der Ladeflüssigkeit angeordnet, so dass bei einer Rotation des Stabelementes um die Längsachse die Ladeflüssigkeit gerührt wird.

Mittels der Heizvorrichtung kann die Probe vor, nach und/oder während des Rührvorganges erwärmt werden.

Das Verfahren kann teil- oder vollautomatisch durchgeführt werden. Hierzu kann die Steuereinheit verwendet werden.

Weitere Ausgestaltungsformen und Vorteile der vorliegenden Erfindung werden anhand der folgenden Ausführungsbeispiele im Zusammenhang mit den Figuren der begleitenden Zeichnungen erläutert. Es zeigen:
- Figur 1: eine schematische Querschnittsdarstellung einer Vorrichtung gemäß der Erfindung.
- Figur 2: eine schematische Querschnittsdarstellung einer Weiterbildung der Vorrichtung gemäß Figur 1.
- Figur 3: eine schematische Querschnittsdarstellung eines Systems gemäß der Erfindung, aufweisend die Vorrichtung aus Figur 2.

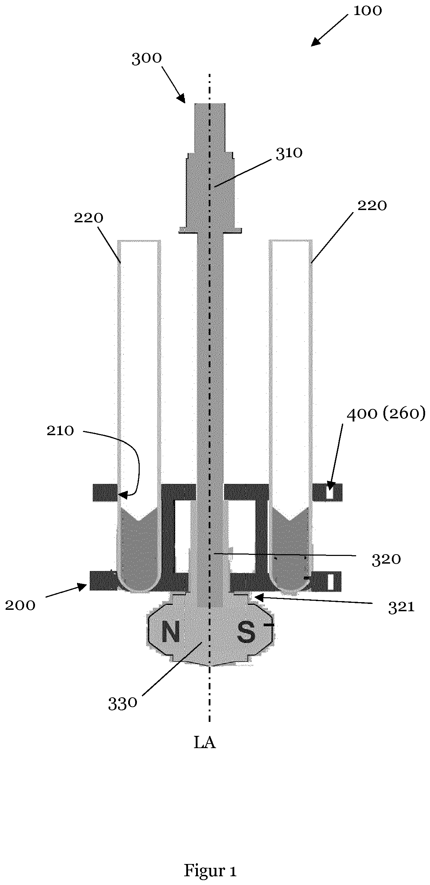

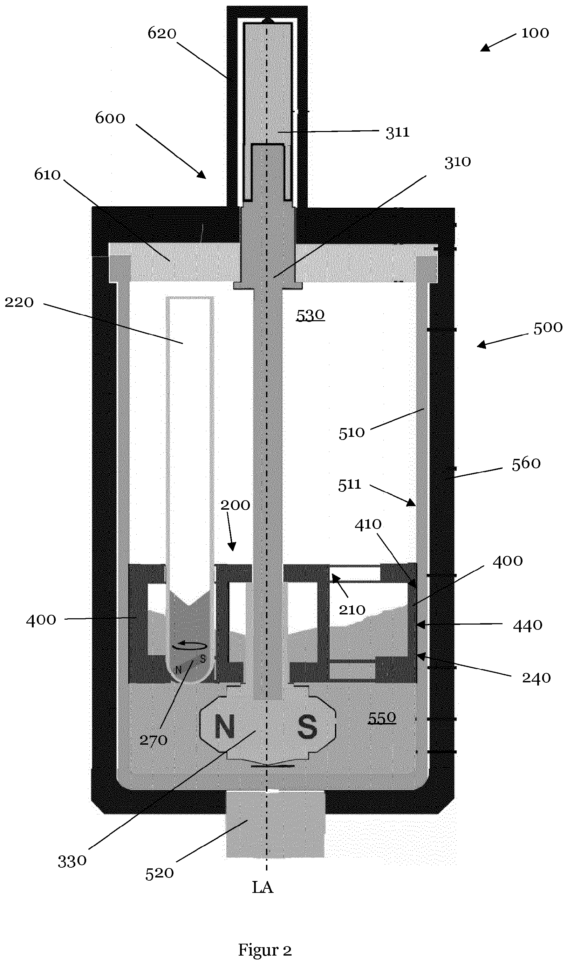

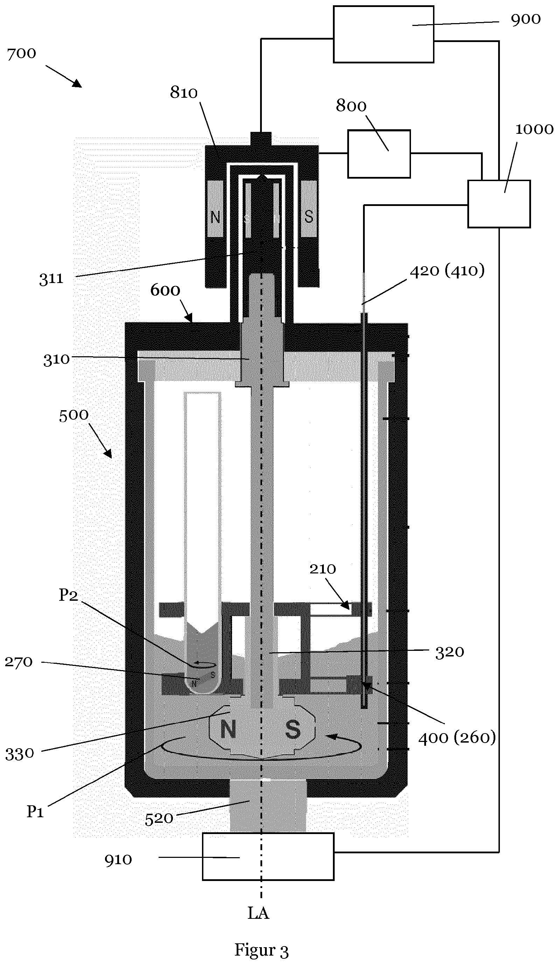

Die Figuren 1 und 2 zeigen unterschiedliche Ausführungsbeispiele einer Vorrichtung 100 zur Erzeugung einer Antriebskraft zum Rühren von Proben, insbesondere von Proben für den Laborbetrieb, gemäß der Erfindung. Figur 3 zeigt ferner ein erfindungsgemäßes System 700 zum Bereitstellen einer Antriebskraft zum Rühren sowie zum Rühren von Flüssigkeiten mit der in Figur 2 dargestellten Vorrichtung 100.

Bei den für den Gegenstand der Erfindung gebräuchlichen Proben kann es sich um jegliche Art von Stoffen oder Stoffgemischen handeln, welche rührfähig sind. Diese können jeglichen Aggregatzustand aufweisen oder auch aus Bestandteilen mit gleichen oder unterschiedlichen Aggregatzuständen zusammengesetzt sein. So kann die Probe beispielsweise eine Flüssigkeit sein. Bei Flüssigkeiten kann es sich beispielsweise um Stoffe oder Stoffgemische (Lösungen, Emulsionen) mit einer geringen Viskosität handeln, welche jedenfalls - ggf. bei durch das System 700 erzeugten bestimmten Temperaturen - fließfähig sind. Auch Flüssigkeiten oder Flüssigkeitsgemische mit darin enthaltenen Feststoffen, wie zum Beispiel Lösungen (bspw. Salzlösung) oder Suspensionen, fallen in den Anwendungsbereich der Vorrichtung 100. Allerdings ist auch die Verwendung von Gelen oder gelartigen Stoffen bis hin zu Stoffen mit hoher Viskosität vorstellbar, solange sie rührfähig sind. Ebenso sind neben Lösungen auch alle anderen homogenen oder heterogenen Stoffgemische denkbar, welche rührfähig sind. Hierunter fallen, neben den genannten Lösungen (bspw. bestehend aus Flüssigkeit+Flüssigkeit, Flüssigkeit+Feststoff, Flüssigkeit+Gas), ebenso Suspensionen (Feststoff+Flüssigkeit), Emulsionen (Flüssigkeit+Flüssigkeit), Aerosole (Flüssigkeit+Gas), und Schaum (Gas+Flüssigkeit). Die Erfindung ist hierauf jedoch nicht beschränkt.

Figur 1 zeigt eine Vorrichtung 100 gemäß der Erfindung in vereinfachter Form. Die Vorrichtung 100 weist dabei eine Probenhalterung 200 zur Aufnahme von wenigstens einem Probenbehälter für Proben 220 auf. Die Probenhalterung 200 weist bevorzugt definierte Aufnahmebereiche 210 zur Aufnahme der Probenbehälter 220 auf. Geeignete Probenbehälter 220 können beispielsweise labortypische Becher- und Reagenzgläser, Erlenmeyerkolben oder Petrischalen sein, wobei diese Aufzählung nicht abschließend ist. Es ist auch vorstellbar, Gefäße als Probenbehälter 220 zu verwenden, die normalerweise nicht in dem Laborbetrieb verwendet werden, jedoch für die Aufnahme oder Umsetzung einer Probe besonders geeignet sind. Als Materialien für die Probenbehälter 220 finden beispielsweise Glas, Porzellan oder fluorierte Kunststoffe, wie beispielsweise PTFE oder PVFD, Verwendung. Die Vorrichtung 100 weist dabei bevorzugt wenigstens einen derartigen Probenbehälter 220 auf.

Die Vorrichtung 100 weist ferner ein Stabelement 300 auf, welches sich entlang einer Längsachse LA erstreckt und mit der Probenhalterung 200 verbunden ist. Die Längsachse LA ist in den Figuren 1 bis 3 jeweils durch eine gestrichelte Linie angedeutet.

Wie in den Figuren dargestellt, sind die Aufnahmebereiche 210 der Probenhalterung 200 in dem verbundenen Zustand von Stabelement 300 und Probenhalterung 200 bevorzugt um die Längsachse LA herum verteilt; bevorzugt gleichmäßig verteilt. Die Probenhalterung 200 kann zudem in Richtung der Längsachse LA gesehen punktsymmetrisch oder zyklisch symmetrisch ausgebildet sein. In den Figuren 1 bis 3 sind die Aufnahmebereiche 210 jeweils als Öffnungen in der Probenhalterung 200 dargestellt, in welche die Probenbehälter 220 eingesetzt werden können. In den Figuren sind die Probenbehälter 220 beispielhaft durch Reagenzgläser und die Probenhalterung 200 beispielhaft als Käfigkonstruktion dargestellt. Alternativ kann die Probenhalterung 200 jedoch auch durch andere Bauteile gebildet werden, wie zum Beispiel eine labortypische Stativstange mit Klemmvorrichtung (nicht dargestellt). Als Materialien können für die Probehalterung 200 beispielsweise Glas, Porzellan oder Kunststoffe, jedoch auch Metalle und Holz, eingesetzt werden. Vorzugsweise wird durch das Material der Probenhalterung 200 jedoch keine Mikrowellenstrahlung absorbiert.

Das Stabelement 300 weist bevorzugt einen im Wesentlichen runden Querschnitt in Richtung der Längsachse LA gesehen auf. Das Stabelement 300 ist zudem bevorzugt aus einem hitzebeständigen und chemisch inerten Material gefertigt, jedoch kann das Stabelement 300 auch lediglich mit einem derartigen Material beschichtet oder überzogen sein.

Das Stabelement 300 weist ferner einen Befestigungsabschnitt 320 auf, mit dem die Probenhalterung 200 an dem Stabelement 300 in einer definierten Position entlang der Längsachse LA befestigt ist; vorzugsweise lösbar befestigt ist. Der Befestigungsabschnitt 320 kann dabei derart ausgebildet sein, dass das Stabelement 300 um die Längsachse LA herum relativ zur Probenhalterung 200 rotierbar gelagert ist. Eine derartige Lagerung kann beispielsweise dadurch erreicht werden, dass zwischen der Probenhalterung 200 und dem Stabelement 300 ein Gleit- oder Drehlager vorgesehen wird. Es ist jedoch auch vorstellbar, den Befestigungsabschnitt 320 direkt durch einen gestuften Abschnitt 321 des Stabelementes 300 zu bilden. Dies ist beispielsweise in den Figuren 1 bis 3 dargestellt. Die Probenhalterung 200 liegt hierbei axial auf einer radialen Stufe des gestuften Abschnitts 321 auf und ist zugleich drehbar bezüglich des Stabelementes 300 gelagert. Die drehbare Lagerung wird zudem bevorzugt durch eine radiale Lagerung der Probenhalterung 200 bzgl. eines axialen Bereichs des Befestigungsabschnittes 320 unterstützt. Alternativ ist es auch vorstellbar, eine vollständige axiale Festlegung der Probenhalterung 200 am Stabelement 300 entlang der Längsachse LA durch konstruktive Mittel zu bewirken und somit lediglich die Drehbarkeit der beiden Bauteile um die Längsachse LA herum zu erlauben. Bevorzugt ist das Stabelement 300 mit der Probenhalterung 200 lösbar verbunden. Dabei ist insbesondere eine formschlüssige Verbindung zwischen der Probenhalterung 200 und dem Stabelement 300 zu bevorzugen, um die Bedienung und Inbetriebnahme der Vorrichtung 100 zu vereinfachen.

Des Weiteren kann die Probenhalterung 200 koaxial mit dem Stabelement 300 verbunden sein. Dies ist exemplarisch in den Figuren 1 bis 3 dargestellt. Darin wird insbesondere ersichtlich, dass die Körperlängsachse der Probenhalterung 200 nicht nur entlang der Längsachse LA ausgerichtet ist, sondern auch mit dieser im Wesentlichen fluchtet. Somit besitzt die Baugruppe aus Probenhalterung 200 und Stabelement 300 eine gemeinsame (Rotations-)Achse, die durch die Längsachse LA gebildet ist. Grundsätzlich und insbesondere auch in dem gezeigten Fall kann es von Vorteil sein, das Stabelement 300 aus einem Material zu fertigen, welches zur Reflexion von Mikrowellenstrahlung geeignet ist. So kann die auf das Stabelement 300 auftreffende Strahlung in Richtung der Probe in den Probenbehältern 220 reflektiert werden, wodurch eine höhere Wärmeausbeutung erreicht wird.

Das Stabelement 300 weist weiterhin einen magnetischen Rührabschnitt 330 auf, mittels dem ein relativ zur Probenhalterung 200 um die Längsachse LA herum rotierendes Magnetfeld erzeugt werden kann. Figur 3 veranschaulicht, wie ein rotierendes Magnetfeld beispielsweise durch relative Drehung des Stabelements 300 zur Probenhalterung 200 um die Längsachse LA (angedeutet durch einen Pfeil P) erzeugt wird. Der magnetische Rührabschnitt 330 kann dabei durch einen Magnet mit zwei Magnetpolen N, S, die sich bevorzugt bzgl. der Längsachse LA einander gegenüber radial erstrecken, wie in den Figuren 1 bis 3 dargestellt, gebildet werden. Der Magnet kann somit als Stabmagnet ausgebildet sein. Durch Rotation des Stabelements 300 bzgl. der Probenhalterung 200 kann der magnetische Rührabschnitt 330 bevorzugt als Drehmagnet bereitgestellt sein, um das rotierende Magnetfeld zu erzeugen. Der magnetische Rührabschnitt 330 erstreckt sich in den dargestellten Ausführungsbeispielen wenigstens teilweise axial unterhalb der Probenhalterung 200. Allerdings sind auch weitere alternative oder ergänzende Ausgestaltungen und somit Anordnungen des magnetischen Rührabschnitts 330 vorstellbar, wie beispielsweise die wenigstens teilweise radiale Erstreckung des magnetischen Rührabschnitts 330 innerhalb und/oder außerhalb und/oder axial oberhalb der Probenhalterung 200.

Alternativ oder ggf. auch ergänzend zu der dargestellten Ausgestaltung des magnetischen Rührabschnitts durch einen (Stab-)Magneten, kann der magnetische Rührabschnitt 330 auch durch einen elektrischen Magneten gebildet sein. Dieser kann bspw. durch ein dreiphasiges System mit drei bzgl. der Längsachse LA um 120° geometrisch verschobene Spulen gebildet sein, durch welche phasenverschobene Ströme zur Erzeugung eines rotierenden Magnetfeldes geleitet werden. In einer derartigen Ausführung des Stabelementes 300 wäre eine Drehbewegung des Stabelementes 300 nicht zwingend erforderlich.

Mittels des in vorbeschriebener oder auch anderer Weise erzeugten rotierenden Magnetfeldes können beispielsweise Rührelemente 270, welche in wenigstens einem der Probenbehälter 220 vorgesehen sind, in Rotation P2 versetzt werden. Das Rührelement 270 ist vorzugsweise ein magnetischer Rührfisch, allerdings sind auch andere Ausgestaltungen des Rührelementes 270 vorstellbar. So könnte beispielsweise ein Rührelement 270 auch derart angetrieben werden, indem eine durch die Magnetfeldänderung induzierte Spannung ausgenutzt wird.

Das Stabelement 300 kann zudem einen mechanischen Rührabschnitt aufweisen, welcher sich radial bzgl. der Längsachse LA erstreckt; also radial vorsteht. In den Figuren 1 bis 3 wird eine vorteilhafte Ausführung des mechanischen Rührabschnitts gezeigt, bei der der mechanische Rührabschnitt durch den magnetischen Rührabschnitt 330 gebildet wird. Wie in Figur 3 dargestellt, kann durch den mechanischen Rührabschnitt 330 eine Rührbewegung - hier bspw. innerhalb eines im weiteren noch beschriebenen Behälters 500 - hervorgerufen werden, wenn das Stabelement 300 rotiert wird.

Das Stabelement 300 weist ferner einen Kopplungsabschnitt 310 auf. Der Kopplungsabschnitt 310 dient insbesondere zum lösbaren Koppeln des Stabelementes 300 mit einer Betriebseinheit 800. Figur 1 zeigt ein Beispiel für eine Ausführungsform des Kopplungsabschnitts 330. Der Kopplungsabschnitt 310 weist bevorzugt einen Kopplungspartner 810 einer mechanischen und/oder magnetischen Kopplung der Betriebseinheit 800 auf. Die Betriebseinheit 800 kann dabei als Stator eines Elektromotors ausgebildet sein, um das Stabelement 300 rotatorisch anzutreiben. Dies ist exemplarisch in Figur 3 dargestellt. Die Betriebseinheit 800 kann jedoch auch beispielsweise als Schaltkreis ausgebildet sein, mittels der eine an die Wicklungen des magnetischen Abschnitts 300 angepasste Stromversorgung bereitgestellt ist. Dabei kann durch Taktung der Richtung des Stromflusses eine Änderung der Pole herbeigeführt werden. Die Steuerung und Taktung des Schaltkreises kann beispielsweise durch eine Steuereinheit 1000 bereitgestellt werden.

Figuren 2 und 3 zeigen ferner eine optionale Weiterbildung des Kopplungsabschnitts 310. Dabei ist der Kopplungsabschnitt 310 mit einem Aufsatz 311 verbunden, welcher den Kopplungsabschnitt 310 entlang der Längsachse LA verlängert. Der Aufsatz 311 und der Kopplungsabschnitt 310 können beispielsweise durch eine formschlüssige und/oder kraftschlüssige Verbindung miteinander gekoppelt sein. Ferner ist auch denkbar, den Aufsatz 311 integral mit dem Kopplungsabschnitt 310 auszuführen. Der Aufsatz 311 kann dabei, je nach gewählter Antriebsart und Betriebseinheit 800, beispielsweise Stromabnehmer oder Magneten aufweisen, durch die das Stabelement 300 mit Antriebsenergie versorgt bzw. angetrieben wird. Es können auch mechanische Kopplungsteile für einen mechanischen Antrieb vorgesehen sein.

Der Kopplungsabschnitt 310, der Befestigungsabschnitt 320 und der magnetische Rührabschnitt 330 sind vorzugsweise in dieser Reihenfolge entlang der Längsachse LA des Stabelements 300 angeordnet. Besonders bevorzugt schließen sich die Abschnitte direkt aneinander an und sind zudem bevorzugt integral miteinander ausgebildet. Die beispielhafte Anordnung der drei Abschnitte entlang der Längsachse LA ist in den Figuren 1 bis 3 gut zu erkennen. Grundsätzlich ist auch eine andere Reihenfolge der Abschnitte des Stabelements 300 denkbar.

Die Vorrichtung 100 kann ferner einen Behälter 500 mit einem Aufnahmeraum 530 zur Aufnahme der Probenhalterung 200 bevorzugt samt Probenbehälter 220 aufweisen. Der Behälter 500 weist bevorzugt eine Koppelöffnung 520 zum Einkoppeln von Mikrowellen in den Aufnahmeraum 530 auf. Hierzu kann das System 700 ein Magnetron 910 oder ähnliches aufweisen. Auch andere Heizvorrichtungen, wie bspw. ein Heizstab, sind denkbar. Die Vorrichtung 100 kann ferner einen Deckel 600 zum Verschließen des Aufnahmeraumes 530 besitzen. Besonders bevorzugt erlaubt der Deckel 600 ein druckdichtes Verschließen des Behälters 500. Der Deckel 600 kann mit einer speziellen Isolierschicht 610 an der Innenseite versehen sein. Ein derartiger Behälter 500 und Deckel 600 werden beispielhaft in den Figuren 2 und 3 dargestellt. Es ist ferner denkbar, den Behälter 500 druckfest auszubilden; hier derart, dass dieser eine druckfeste Außenhülle 560 aufweist. Der Behälter bzw. dessen Außenhülle 560 besteht bevorzugt aus einem druckfesten Material, wie beispielsweise rostfreiem Stahl.

Der Behälter 500 kann bevorzugt an seinen Innenwänden eine Verkleidung 510 aufweisen. Diese kann bspw. aus PTFE gebildet sein, um den Aufnahmeraum 530 des Behälters 500 chemisch inert auszubilden. Die Verkleidung 510 kann bspw. in Form einer Beschichtung vorgesehen sein. Es ist jedoch auch denkbar, die Verkleidung 510 in Form eines lösbar in den Behälter 500 einsetzbaren Einsatzes auszubilden. Es wird bevorzugt durch einen derartigen Aufbau möglich, in den Behälter 500 eine zusätzliche Ladeflüssigkeit 550 einzufüllen. Das Einfüllen der Ladeflüssigkeit 550 erfolgt bevorzugt vor oder nach erfolgter Befestigung der Probenhalterung 200 und des Stabelementes 300 in dem Aufnahmeraum 530. Die Probenbehälter 220 können wenigstens teilweise in die Ladeflüssigkeit 550 hineinragen. Für den Fall, dass an dem Stabelement 300 der mechanische Rührabschnitt derart vorgesehen ist, dass dieser die Ladeflüssigkeit 550 erreicht, so kann bei einer Rotation P1 des Stabelementes 300 um die Längsachse LA die Ladeflüssigkeit 550 gerührt werden. Dadurch wird es möglich, den Aufnahmeraum 530 möglichst effizient auszunutzen und bei einer Erwärmung der großflächigen Ladeflüssigkeit 550 ebenfalls eine gleichmäßige Erwärmung der kleineren Probenbehälter 220 durch Erzeugen der Antriebskraft durch den magnetischen Antriebabschnitt 330 zu bewirken.

Die Probenhalterung 200 ist bevorzugt bzgl. der Längsachse LA rotatorisch fixiert. Die Vorrichtung 100 kann hierzu ein Blockierteil 410 umfassen, welches mit einem Blockierbereich 400, insbesondere einer Blockierstruktur 240, der Probenhalterung 200 derart zusammenwirkt, dass die Probenhalterung 200 bezüglich der Längsachse LA rotatorisch fixiert wird. Besonders bevorzugt ist der Behälter 500 mit dem Blockierteil 410 zusammen ausgebildet; vorzugsweise integral. Figur 2 zeigt dabei exemplarisch eine rotatorische Fixierung der Probenhalterung 200 durch Bildung einer Presspassung 440 zwischen der wenigstens teilweise als Blockierteil 410 ausgebildeten Innenseite 511 des Behälters 500 - hier dessen Aufnahmegefäß 510 - und der als Blockierbereich 400 ausgebildeten Außenseite 240 der Probenhalterung 200. Dabei wird durch die Flächenpressung der beiden Flächen 240, 511 eine Reibkraft erzeugt, durch die die Probenhalterung 200 bezüglich der Längsachse LA durch kraftschlüssige Verbindung rotatorisch fixiert ist. Die Flächen 240, 511 können bevorzugt eine korrespondierende Struktur aufweisen, um alternativ oder zusätzlich zu einer kraftschlüssigen Verbindung eine formschlüssige Verbindung bzgl. einer Umfangsrichtung um die Längsachse LA herum bereitzustellen. Alternativ ist es beispielsweise auch denkbar, dass die Probenhalterung 200 derart ausgebildet ist, dass sie sich bzgl. der Längsachse LA mit einer anderen Geschwindigkeit und vorzugsweise langsamer als das rotierende Magnetfeld dreht.

Eine weitere beispielhafte Ausgestaltung des Blockierteils 410 geht aus der Beschreibung des erfindungsgemäßen Systems 700 unter Zuhilfenahme von Figur 3 hervor.

Das System 700 weist hier eine Betriebseinheit 800 sowie eine Vorrichtung 100 auf, welche mit der Betriebseinheit 800 über den Kopplungsabschnitt 310 lösbar gekoppelt ist. Zudem kann das System 700 einen Thermofühler 420 zur Temperaturerfassung in den Probenbehältern 220 oder dem Behälter 500 aufweisen. Der Thermofühler 420 kann, wie in Figur 3 gezeigt, stabförmig ausgebildet sein. Der Thermofühler 420 ragt bevorzugt in den Behälter 500 hinein und kann mit dem Deckel 600 verbunden sein. Dabei kann mittels des Thermofühlers 410 das Blockierteil 410 gebildet sein. Der Thermofühler 410 bildet dabei in Umfangsrichtung um die Längsachse LA herum betrachtet mit einer den Blockierbereich 400 bildenden Ausnehmung 260 des Probenträgers 200 eine formschlüssige Verbindung. Die den Blockierbereich 400 bildende Ausnehmung 260 des Probenträgers 200 ist auch in Figur 1 dargestellt.

Der Deckel 600 kann zusammen mit der Betriebseinheit 800 ausgebildet sein, so dass Deckel 600 und Betriebseinheit 800 bevorzugt als eine Baugruppe bewegt werden können. Ferner kann das System 700 eine Antriebseinheit 900 aufweisen, mittels der der Deckel 600 relativ zum Behälter 500 teil- oder vollautomatisiert bewegbar ist, um den Behälter 500 wahlweise zu öffnen oder mit dem Deckel 600 zu verschließen.

Das System kann ferner eine Steuereinheit 1000 aufweisen, welche die Betriebseinheit 800 und bevorzugt ferner die Antriebseinheit 900 sowie die Heizvorrichtung 910 steuert. Die Steuereinheit 1000 kann dabei bevorzugt eine voll- oder teilautomatisiert Steuerung ermöglichen. Die Steuereinheit 1000 kann hierzu bevorzugt mit dem Thermofühler 420 verbunden sein, um eine Temperatur-abhängige Steuerung zu ermöglichen.

Im Folgenden wird ein Verfahren zum Rühren von Proben in Probenbehältern, insbesondere Proben für den Laborbetrieb, beschrieben.

In einem ersten Schritt wird ein System 700 der vorbeschriebenen Art bereitgestellt. Dieser Schritt kann beispielsweise das lösbare Verbinden des Stabelementes 300 mit dem Probenbehälter 200 mittels des Verbindungsabschnittes 320 beinhalten. Ferner kann das Stabelement 300 über dessen Kopplungsabschnitt 310 mit der Betriebseinheit 800 lösbar gekoppelt werden.

In einem zweiten Schritt wird wenigstens ein eine Probe aufweisender Probenbehälter 220 in die Probenhalterung 200 eingesetzt, wobei in wenigstens einem der Probenbehälter 220 ein Rührelement 270 angeordnet ist.

Die Vorrichtung 100 kann nun mittels des Kopplungsabschnittes 310 des Stabelements 300 mit der Betriebseinheit 800 lösbar gekoppelt werden. Ist die Betriebseinheit 800 dabei zusammen mit dem Deckel 600 ausgebildet, so kann beispielsweise durch magnetische Anziehungskräfte die Vorrichtung 100 direkt mit dem Deckel 600 gekoppelt werden. Mittels des Aufsatzes 311 kann dabei ferner eine Zentrierung in dem Deckel 600 erreicht werden. Ist zudem eine Antriebseinheit 900 in dem System 100 vorgesehen, so kann der Deckel 600 automatisch auf den Behälter 500 gefahren werden, um diesen vorzugsweise druckdicht zu verschließen, während gleichzeitig die Probenhalterung 200 in den Aufnahmeraum 530 aufgenommen wird. In den Behälter 500 kann zudem beispielsweise vorab Ladeflüssigkeit 550 eingefüllt worden sein.

Nun wird gemäß der Erfindung ein relativ zur Probenhalterung 200 um die Längsachse LA herum rotierendes Magnetfeld mittels des magnetischen Rührabschnitts 330 erzeugt, um die Rührelemente 270 in den Probenbehältern 220 in Rotation P2 zu versetzen. Das rotierende Magnetfeld kann dabei durch einen elektrischen Magneten erzeugt werden. Alternativ oder ergänzend ist es auch denkbar, das Stabelement 300 relativ zur Probenhalterung 200 um die Längsachse LA herum zu rotieren, während bevorzugt die Probenhalterung 200 mittels des Blockierbereiches 400 bzgl. der Längsachse LA rotatorisch fixiert wird. Weist der magnetische Rührabschnitt einen (Stab-)Magneten auf, wird durch diese Rotation P1 das rotierende Magnetfeld erzeugt. Ist in den Behälter 500 eine Ladeflüssigkeit 550 eingefüllt, in welche die Probenbehälter 220 wenigstens teilweise hineinragen, so ist bevorzugt ein mechanischer Rührabschnitt - bspw. durch den magnetischen Rührabschnitt 330 gebildet - bereitgestellt, welcher in der Ladeflüssigkeit 550 angeordnet ist, so dass bei einer Rotation P1 des Stabelementes 300 um die Längsachse LA die Ladeflüssigkeit 550 gerührt wird.

Mittels einer wahlweise bereitgestellten Heizvorrichtung kann die Probe bzw. in den Probenbehältern 220 oder im Behälter 500 (somit bspw. auch die Ladeflüssigkeit 550) vor, nach und/oder während des Rührvorganges erwärmt werden.

Nach Beendigung des gewünschten Verfahrens unter Rühren kann beispielsweise mittels der Antriebseinheit 900 der Deckel 600 wieder von dem Behälter 500 entfernt werden. Die Vorrichtung 100 kann dabei mittels Abziehen des Stabelementes 300 von dem Kopplungspartner 810 entfernt werden.

Das Verfahren kann teil- oder vollautomatisch durchgeführt werden. Hierzu kann die Steuereinheit 1000 verwendet werden.

Weitere Verfahrensschritte ergeben sich entsprechend aus der Beschreibung der Vorrichtung 100 und des Systems 700.

Die vorliegende Erfindung ist durch die vorbeschriebenen Ausführungsbeispiele nicht beschränkt, sofern sie vom Gegenstand der folgenden Ansprüche umfasst ist.

## Patentansprüche

1. Vorrichtung (100) zur Erzeugung einer Antriebskraft zum Rühren von Proben, insbesondere von Proben für den Laborbetrieb wie bspw. Flüssigkeiten, Flüssigkeiten mit darin enthaltenen Feststoffproben oder Feststoffproben, aufweisend
• eine Probenhalterung (200) zur Aufnahme von wenigstens einem Probenbehälter (220) für Proben, und
• ein Stabelement (300), welches sich entlang einer Längsachse (LA) erstreckt und welches mit der Probenhalterung (200) verbunden ist,
wobei das Stabelement (300) aufweist:
∘ einen Kopplungsabschnitt (310) zum lösbaren Koppeln des Stabelementes (300) mit einer Betriebseinheit (800),
∘ einen Befestigungsabschnitt (320) zur Befestigung der Probenhalterung (200) an dem Stabelement (300) und zur definierten Positionierung der Probenhalterung (200) entlang der Längsachse (LA), und
**dadurch gekennzeichnet, dass** das Stabelement (300) einen magnetischen Rührabschnitt (330) aufweist, und wobei das Stabelement (300) derart ausgebildet ist, dass mittels des magnetischen Rührabschnittes (330) ein relativ zur Probenhalterung (200) um die Längsachse (LA) herum rotierendes Magnetfeld erzeugt werden kann.

2. Vorrichtung (100) gemäß Anspruch 1, wobei die Probenhalterung (200) mit dem Stabelement (300) koaxial und/oder lösbar verbunden ist, und/oder
wobei die Probenhalterung (200) in Richtung der Längsachse (LA) gesehen punktsymmetrisch oder zyklisch symmetrisch ausgebildet ist.

3. Vorrichtung (100) gemäß einem der vorhergehenden Ansprüche,
wobei der magnetische Rührabschnitt (330) durch einen elektrischen Magneten gebildet ist, und/oder
wobei der magnetische Rührabschnitt (330) durch einen Magnet, insbesondere einen Stabmagnet bzw. einen Drehmagneten, mit zwei Magnetpolen gebildet ist, wobei die Magnetpole sich bevorzugt bzgl. der Längsachse (LA) einander gegenüber radial erstrecken.

4. Vorrichtung (100) gemäß einem der vorhergehenden Ansprüche, wobei der Befestigungsabschnitt (320) derart ausgebildet ist, dass das Stabelement (300) um die Längsachse (LA) herum relativ zur Probenhalterung (200) rotierbar gelagert ist, wobei vorzugsweise durch Rotation des Stabelements (300) bzgl. der Probenhalterung (200) der magnetische Rührabschnitt (330) als Drehmagnet bereitgestellt ist, um das rotierende Magnetfeld zu erzeugen, und/oder
wobei der Befestigungsabschnitt (320) durch einen gestuften Abschnitt (321) des Stabelementes (300) gebildet ist, wobei die Probenhalterung (200) axial auf einer radialen Stufe des gestuften Abschnitts (321) aufliegt und vorzugsweise rotierbar gelagert ist.

5. Vorrichtung (100) gemäß einem der vorhergehenden Ansprüche, wobei das Stabelement (300) einen mechanischen Rührabschnitt aufweist, welcher sich radial bzgl. der Längsachse (LA) erstreckt, wobei der mechanische Rührabschnitt bevorzugt durch den magnetischen Rührabschnitt (330) gebildet ist, und/oder
wobei sich der magnetische Rührabschnitt (330) wenigstens teilweise radial innerhalb oder außerhalb oder wenigstens teilweise axial unterhalb der Probenhalterung (200) erstreckt.

6. Vorrichtung (100) gemäß einem der vorhergehenden Ansprüche, wobei die Probenhalterung (200) bzgl. der Längsachse (LA) rotatorisch fixiert ist oder derart ausgebildet ist, dass sie sich bzgl. der Längsachse mit einer anderen Geschwindigkeit und vorzugsweise langsamer als das rotierende Magnetfeld, besonders bevorzugt als der rotierende Drehmagnet, dreht,
wobei die Vorrichtung (100) vorzugsweise ferner ein Blockierteil (410) aufweist, welches mit einem Blockierbereich (400), insbesondere einer Blockierstruktur (240), der Probenhalterung (200) derart zusammenwirkt, um die Probenhalterung (200) bzgl. der Längsachse (LA) rotatorisch zu fixieren.

7. Vorrichtung (100) gemäß einem der vorhergehenden Ansprüche, ferner aufweisend einen Behälter (500) mit einem Aufnahmeraum (530) zur Aufnahme der Probenhalterung (200), wobei der Behälter (500) bevorzugt mit dem Blockierteil (410) zusammen ausgebildet ist, besonders bevorzugt integral mit diesem ausgebildet ist,
wobei die Vorrichtung (100) vorzugsweise ferner einen Deckel (600) zum Verschließen, vorzugsweise zum druckdichten Verschließen, des Aufnahmeraumes (530) aufweist, und/oder
wobei der Behälter (500) vorzugsweise eine Koppelöffnung (520) zum Einkoppeln von Mikrowellen in den Aufnahmeraum (530) aufweist.

8. Vorrichtung (100) gemäß einem der vorhergehenden Ansprüche, wobei die Probenhalterung (200) definierte Aufnahmebereiche (210) zur Aufnahme der Probenbehälter (220) aufweist, wobei die Aufnahmebereiche (210) in dem verbundenen Zustand bevorzugt um die Längsachse (LA) verteilt, besonders bevorzugt gleichmäßig verteilt, angeordnet sind, und/oder
wobei die Vorrichtung (100) ferner wenigstens einen Probenbehälter (220) aufweist,
wobei in dem wenigstens einen Probenbehälter (220) ein Rührelement (270), vorzugsweise ein Rührfisch, angeordnet ist, welches mittels des rotierenden Magnetfeldes des magnetischen Rührabschnitts (330) in Rotation (P2) versetzbar ist.

9. Vorrichtung (100) gemäß einem der vorhergehenden Ansprüche, wobei der Kopplungsabschnitt (310) einen Kopplungspartner (810) einer mechanischen und/oder magnetischen Kopplung einer Betriebseinheit (800) aufweist, und/oder wobei der Kopplungsabschnitt (310), der Befestigungsabschnitt (320) und der magnetische Rührabschnitt (330) bevorzugt in dieser Reihenfolge entlang der Längsachse (LA) des Stabelements angeordnet sind, besonders bevorzugt sich direkt aneinander anschließen, und ferner bevorzugt integral miteinander ausgebildet sind.

10. System (700) aufweisend
• eine Betriebseinheit (800) sowie
• eine Vorrichtung (100) gemäß einem der vorhergehenden Ansprüche, wobei die Vorrichtung (100) mit der Betriebseinheit (800) über den Kopplungsabschnitt (310) lösbar gekoppelt ist.

11. System (700) gemäß Anspruch 10, ferner aufweisend einen bevorzugt stabförmigen Thermofühler (420) zur Temperaturerfassung in den Probenbehältern (220) oder dem Behälter (500), wobei vorzugsweise das Blockierteil (410) durch den Thermofühler (420) gebildet ist, welcher in Umfangsrichtung um die Längsachse (LA) herum betrachtet mit einer den Blockierbereich (400) bildenden Ausnehmung (260) des Probenträgers (200) eine formschlüssige Verbindung bildet, wobei der Thermofühler (420) bevorzugt in den Behälter (500) hineinragt, und wobei der Thermofühler (420) besonders bevorzugt mit dem Deckel (600) verbunden ist.

12. System (700) gemäß einem der Ansprüche 10 oder 11,
wobei der Deckel (600) zusammen mit der Betriebseinheit (800) ausgebildet ist, und/oder
wobei das System (700) ferner aufweist:
eine Antriebseinheit (900), mittels der der Deckel (600) relativ zum Behälter (500) teil- oder vollautomatisiert bewegbar ist, um den Behälter (500) wahlweise zu öffnen oder mit dem Deckel (600) zu verschließen, und/oder
eine Heizvorrichtung (910), wie einen Heizstab oder ein Magnetron, zum Erwärmen einer Probe, und/oder
eine Steuereinheit (1000) zum Steuern der Betriebseinheit (800) und bevorzugt ferner zum Steuern der Antriebseinheit (900) sowie der Heizvorrichtung (910).

13. Verfahren zum Rühren von Proben in Probenbehältern, insbesondere Proben für den Laborbetrieb wie bspw. Flüssigkeiten, Flüssigkeiten mit darin enthaltenen Feststoffproben oder Feststoffproben, aufweisend die folgenden Schritte:
• Bereitstellen eines Systems (700) gemäß einem der Ansprüche 10 bis 12,
• Einsetzen von wenigstens einem eine Probe aufweisenden Probenbehälter (220) in die Probenhalterung (200), wobei in wenigstens einem der Probenbehälter (220) ein Rührelement (270) angeordnet ist,
• Erzeugen eines relativ zur Probenhalterung (200) um die Längsachse (LA) herum rotierenden Magnetfelds mittels des magnetischen Rührabschnitts (330), um die Rührelemente (270) in den Probenbehältern (220) in Rotation (P2) zu versetzen.

14. Verfahren gemäß Anspruch 13, wobei die Vorrichtung (100), bevorzugt wenigstens die Probenhalterung (200), vor der Erzeugung des rotierenden Magnetfeldes in den Aufnahmeraum (530) des Behälters (500) aufgenommen wird, wobei ferner bevorzugt der Aufnahmeraum (530) mittels des Deckels (600) bevorzugt druckdicht verschlossen wird.

15. Verfahren gemäß Anspruch 13 oder 14, wobei das Stabelement (300) relativ zur Probenhalterung (200) um die Längsachse (LA) herum rotiert wird, während bevorzugt die Probenhalterung (200) mittels des Blockierbereiches (400) bzgl. der Längsachse (LA) rotatorisch fixiert wird,
wobei vorzugsweise in den Behälter (500) ferner eine Ladeflüssigkeit (550) eingefüllt ist, in welche die Probenbehälter (220) wenigstens teilweise hineinragen, wobei ferner vorzugsweise der mechanische Rührabschnitt in der Ladeflüssigkeit (550) angeordnet ist, so dass bei einer Rotation (P1) des Stabelementes (300) um die Längsachse (LA) die Ladeflüssigkeit (550) gerührt wird.

## Claims

1. A device (100) for generating a driving force for stirring of samples, in particular samples for laboratory operation, as for example fluids, fluids containing solid samples, or solid samples, comprising
• a sample holder (200) for receiving at least one sample reservoir (220) for samples, and
• a rod member (300) which extends along a longitudinal axis (LA), and which is coupled to the sample holder (200),
wherein the rod member (300) comprises:
∘ a coupling portion (310) for detachably coupling the rod member (300) to an operating unit (800),
∘ a mounting portion (320) for mounting the sample holder (200) to the rod member (300) and for a defined positioning of the sample holder (200) along the longitudinal axis (LA), and
**characterized in that**
the rod member (300) comprises a magnetic stirring portion (330), and
wherein the rod member (300) is configured such that a magnetic field may be generated which is rotating around the longitudinal axis (LA) relative to the sample holder (200) by means of the magnetic stirring portion (330).

2. The device (100) according to claim 1, wherein the sample holder (200) is coupled to
the rod member (300) in a coaxial way and/or in a detachable way, and/or
wherein the sample holder (200) is formed in a point-symmetric or cyclically symmetric way when viewed in the direction of the longitudinal axis (LA).

3. The device (100) according to one of the preceding claims,
wherein the magnetic stirring portion (330) is formed by an electric magnet, and/or
wherein the magnetic stirring portion (330) is formed by a magnet, in particular by a bar magnet or a rotary magnet, including two magnetic poles, wherein the magnetic poles preferably extend radially relative to the longitudinal axis (LA) opposite to each other.

4. The device (100) according to one of the preceding claims, wherein the mounting portion (320) is formed such that the rod member (300) is rotatably supported relative to the sample holder (200) around the longitudinal axis (LA),
wherein preferably by rotation of the rod member (300) relative to the sample holder (200), the magnetic stirring portion (330) is provided as rotary magnet to generate the rotating magnetic field, and/or
wherein the mounting portion (320) is formed by a stepped portion (321) of the rod member (300), wherein the sample holder (200) axially abuts on a radial step of the stepped portion (321), and is preferably rotatably supported.

5. The device (100) according to one of the preceding claims, wherein the rod member (300) comprises a mechanic stirring portion which extends radially relative to the longitudinal axis (LA), wherein the mechanic stirring portion is preferably formed by the magnetic stirring portion (330), and/or
wherein the magnetic stirring portion (330) extends at least partially radially inside or outside, or at least partially axially underneath the sample holder (200).

6. The device (100) according to one of the preceding claims, wherein the sample holder (200) is rotationally fixed relative to the longitudinal axis (LA) or is formed such that it rotates relative to the longitudinal axis in different speed, and preferably rotates slower than the rotating magnetic field, most preferably as the rotating rotary magnet,
wherein the device (100) preferably also comprises a locking part (410), which cooperates with a locking region (400), in particular a locking structure (240) of the sample holder (200) in a way to rotatably fix the sample holder (200) relative to the longitudinal axis (LA).

7. The device (100) according to one of the preceding claims, further comprising
a container (500) including a receiving space (530) for receiving the sample holder (200), wherein the container (500) is preferably formed together with the locking part (410), most preferably integrally therewith,
wherein the device (100) preferably also comprises a lid (600) for closing, preferably pressure-tight closing, of the receiving space (530), and/or
wherein the container (500) preferably comprises a coupling hole (520) for coupling of microwaves into the receiving space (530).

8. The device (100) according to one of the preceding claims, wherein the sample holder (200) comprises defined receiving spaces (210) for receiving the sample reservoirs (220), wherein the receiving spaces (210) are preferably spaced around the longitudinal axis (LA) in a connected state, most preferably are evenly spaced, and/or
wherein the device (100) further comprises at least one sample reservoir (220),
wherein a stirring member (270), preferably a magnetic stir bar, which may be caused to rotate (P2) by means of the rotating magnetic field of the magnetic stirring portion (330), is arranged in the at least one sample reservoir (220).

9. The device (100) according to one of the preceding claims, wherein the coupling portion (310) comprises a coupling mate (810) of a mechanic and/or magnetic coupling of an operating unit (800), and/or
wherein the coupling portion (310), the mounting portion (320), and the magnetic stirring portion (330) are preferably arranged in this sequence along the longitudinal axis (LA) of the rod member, most preferably are seamlessly attached to each other, and further preferably are formed integrally with each other.

10. A system (700) comprising
• an operating unit (800) and
• a device (100) according to one of the preceding claims, wherein the device (800) is detachably coupled to the operating unit (800) by means of the coupling portion (310).

11. The system (700) according to claim 10, further comprising a preferably bar-shaped thermosensor (420) for detecting a temperature in the sample reservoirs (220) or in the container (500), wherein preferably the locking part (410) is formed by the thermosensor (420), which forms an interlocking connection with a recess (260) of the sample holder (200) which constitutes the locking region (400) when viewed in the peripheral direction around the longitudinal axis (LA), wherein the thermosensor (420) preferably protrudes into the container (500), and wherein most preferably the thermosensor (420) is connected to the lid (600).

12. The system (700) according to one of claim 10 or 11,
wherein the lid (600) is formed together with the operating unit (800), and/or
wherein the system (700) further comprises:
a driving unit (900) by means of which the lid (600) is movable relative to the container (500) in a semi-automated or completely automated way to selectively open the container (500) or close the container by means of the lid (600), and/or
a heating device (910) like a heating bar or a magnetron for heating a sample, and/or
a control unit (1000) for controlling the operating unit (800) and preferably furthermore for controlling the operating unit (900) and the heating device (910).

13. A method for stirring samples in sample reservoirs, in particular samples for laboratory operation, as for example fluids, fluid containing solid samples, or solid samples, comprising the following steps:
• providing a system (700) according to one of claims 10 to 12,
• inserting of at least one sample reservoir (220) including a sample into the sample holder (200), wherein a stirring member (270) is arranged in at least one of the sample reservoirs (220),
• generating of a rotating magnetic field relative to the sample holder (200) about the longitudinal axis (LA) by means of a magnetic stirring portion (330) to cause the stirring members (270) in the sample reservoirs (220) to rotate (P2).

14. The method according to claim 13, wherein the device (100), preferably at least the sample holder (200) is received in the receiving space (530) of the container (500) before generating the rotating magnetic field, wherein further preferably the receiving space (530) is closed by means of the lid (600) in a preferably pressure-tight way.

15. The method according to claim 13 or 14, wherein the rod member (300) is rotated relative to the sample holder (200) around the longitudinal axis (LA), wherein preferably the sample holder (200) is rotatably fixed relative to the longitudinal axis (LA) by means of the locking region (400),
wherein preferably a loading fluid (550) is also filled into the container (500), into which the sample reservoirs (220) at least partially protrude, wherein in further preferably the mechanical stirring portion is arranged in the loading fluid (550) such that the loading fluid (550) is stirred during a rotation (P1) of the rod member (300) around the longitudinal axis (LA).

## Revendications

1. Dispositif (100) permettant de produire une force motrice pour l'agitation d'échantillons, en particulier d'échantillons pour les travaux de laboratoire comme par exemple des liquides, des liquides contenant des échantillons solides ou des échantillons solides, comportant
- un porte-échantillons (200) permettant de recevoir au moins un récipient à échantillon (220) pour les échantillons, et
- un élément de tige (300), lequel s'étend le long d'un axe longitudinal (LA) et lequel est raccordé au porte-échantillons (200), dans lequel l'élément de tige (300) comporte :
o une section d'accouplement (310) permettant l'accouplement détachable de l'élément de tige (300) à une unité opérationnelle (800),
∘ une section d'immobilisation (320) permettant d'immobiliser le porte-échantillons (200) sur l'élément de tige (300) et de positionner de manière définie le porte-échantillons (200) le long de l'axe longitudinal (LA), et
**caractérisé en ce que** l'élément de tige (300) comporte une section d'agitation magnétique (330), et dans lequel l'élément de tige (300) est réalisé de sorte qu'au moyen de la section d'agitation magnétique (330) un champ magnétique en rotation autour de l'axe longitudinal (LA) par rapport au porte-échantillons (200) peut être obtenu.

2. Dispositif (100) selon la revendication 1, dans lequel le porte-échantillons (200) est raccordé à l'élément de tige (300) de manière coaxiale et/ou détachable, et/ou
dans lequel le porte-échantillons (200), vu dans la direction de l'axe longitudinal (LA), est réalisé avec une symétrie centrale ou une symétrie cyclique.

3. Dispositif (100) selon l'une des revendications précédentes,
dans lequel la section d'agitation magnétique (330) est formée par un électro-aimant, et/ou
dans lequel la section d'agitation magnétique (330) est formée par un aimant, en particulier un aimant droit ou un aimant tournant, doté de deux pôles magnétiques, dans lequel les pôles magnétiques sont opposés l'un à l'autre de préférence radialement par rapport à l'axe longitudinal (LA).

4. Dispositif (100) selon l'une des revendications précédentes, dans lequel la section d'immobilisation (320) est réalisée de telle sorte que l'élément de tige (300) est disposé pour pouvoir tourner autour de l'axe longitudinal (LA) par rapport au porte-échantillons (200),
dans lequel, de préférence, la section d'agitation magnétique (330) est fournie comme aimant tournant par rotation de l'élément de tige (300) par rapport au porte-échantillons (200), afin d'obtenir le champ magnétique tournant, et/ou
dans lequel la section d'immobilisation (320) est formée par une section étagée (321) de l'élément de tige (300), dans lequel le porte-échantillons (200) repose sur un étage radial de la section étagée (321) et de préférence disposé en rotation.

5. Dispositif (100) selon l'une des revendications précédentes, dans lequel l'élément de tige (300) comporte une section d'agitation mécanique, laquelle s'étend radialement par rapport à l'axe longitudinal (LA), dans lequel la section d'agitation mécanique est de préférence formée par la section d'agitation magnétique (330), et/ou
dans lequel la section d'agitation magnétique (330) s'étend au moins partiellement de manière radiale à l'intérieur ou à l'extérieur ou au moins partiellement de manière axiale en dessous du porte-échantillons (200).

6. Dispositif (100) selon l'une des revendications précédentes, dans lequel le porte-échantillons (200) est fixé en rotation par rapport à l'axe longitudinal (LA) ou est réalisé de façon à tourner à une vitesse différente par rapport à l'axe longitudinal et, de préférence, plus lentement que le champ magnétique tournant, tout particulièrement plus lentement que l'aimant tournant en rotation,
dans lequel, de préférence, le dispositif (100) comporte en outre une pièce de blocage (410), laquelle coopère avec une zone de blocage (400), en particulier une structure de blocage (240), du porte-échantillons (200) de façon à fixer le porte-échantillons (200) en rotation par rapport à l'axe longitudinal (LA).

7. Dispositif (100) selon l'une des revendications précédentes, comportant en outre un récipient (500) doté d'un volume de logement (530) permettant de loger le porte-échantillons (200), dans lequel le récipient (500) est de préférence réalisé de manière uniforme avec la pièce de blocage (410), tout particulièrement réalisé comme intégré à celle-ci,
dans lequel le dispositif (100), en outre, comporte de préférence un couvercle (600) pour fermer, de préférence pour fermer de manière étanche, le volume de logement (530), et/ou
dans lequel le récipient (500) comporte de préférence une ouverture d'accouplement (520) permettant d'accoupler des micro-ondes dans le volume de logement (530).

8. Dispositif (100) selon l'une des revendications précédentes, dans lequel le porte-échantillons (200) comporte des zones de logement (210) définies pour loger les récipients à échantillon (220), dans lequel les zones de logement (210) sont, dans l'état raccordé, de préférence agencées comme distribuées autour de l'axe longitudinal (LA), plus particulièrement distribuées également, et/ou
dans lequel le dispositif (100) comporte en outre au moins un récipient à échantillon (220), dans lequel dans l'au moins un récipient à échantillon (220) est agencé un élément d'agitation (270), de préférence un barreau aimanté, lequel peut être mis en rotation (P2) au moyen du champ magnétique tournant de la section d'agitation magnétique (330).

9. Dispositif (100) selon l'une des revendications précédentes, dans lequel la section d'accouplement (310) comporte un partenaire d'accouplement (810) d'un accouplement mécanique et/ou magnétique d'une unité opérationnelle (800), et/ou
dans lequel la section d'accouplement (310), la section d'immobilisation (320) et la section d'agitation magnétique (330) sont de préférence agencées dans cet ordre le long de l'axe longitudinal (LA) de l'élément de tige, plus particulièrement directement adjacentes l'une à l'autre, et sont tout particulièrement réalisées comme intégrées l'une à l'autre.

10. Système (700), comportant
- une unité opérationnelle (800) ainsi
- qu'un dispositif (100) selon l'une des revendications précédentes, dans lequel le dispositif (100) est accouplé de manière détachable avec l'unité opérationnelle (800) par le biais de la section d'accouplement (310).

11. Système (700) selon la revendication 10, comportant en outre un capteur thermique (420) de préférence en forme de tige permettant de saisir la température dans les récipients à échantillon (220) ou dans le récipient (500), dans lequel la pièce de blocage (410) est de préférence formée par le capteur thermique (420), lequel forme un raccord par complémentarité de formes avec un évidement (260) du porte-échantillons (200) formant la zone de blocage (400) vu dans la direction circonférentielle autour de l'axe longitudinal (LA), dans lequel le capteur thermique (420) s'engage de préférence dans le récipient (500), et dans lequel le capteur thermique (420) est plus particulièrement raccordé au couvercle (600).

12. Système (700) selon l'une des revendications 10 ou 11,
dans lequel le couvercle (600) est réalisé de manière uniforme avec l'unité opérationnelle (800), et/ou dans lequel le système comporte en outre :
une unité motrice (900), au moyen de laquelle le couvercle (600) est mobile par rapport au récipient (500) de manière partiellement ou entièrement automatique, afin de sélectivement ouvrir le récipient ou le fermer avec le couvercle (600), et/ou
un dispositif de chauffage (910), comme un élément chauffant ou un magnétron, permettant de chauffer un échantillon, et/ou
une unité de commande (1000) permettant de commander l'unité opérationnelle (800) et, de préférence, de commander en outre l'unité motrice (900) ainsi que le dispositif de chauffage (910).

13. Procédé pour l'agitation d'échantillons dans des récipients à échantillon, en particulier d'échantillons pour les travaux de laboratoire comme par exemple des liquides, des liquides contenant des échantillons solides ou des échantillons solides, comportant les étapes suivantes :
- préparation d'un système (700) selon l'une des revendications 10 à 12,
- insertion d'au moins un récipient à échantillon (220) comportant un échantillon dans le porte-échantillons (200), dans lequel un élément d'agitation (270) est agencé dans au moins un des récipients à échantillon (220),
- production d'un champ magnétique en rotation autour de l'axe longitudinal (LA) par rapport au porte-échantillons (200) au moyen de la section d'agitation magnétique (330), afin de mettre en rotation (P2) les éléments d'agitation (270) dans les récipients à échantillon (220).

14. Procédé selon la revendication 13, dans lequel le dispositif (100), de préférence au moins le porte-échantillons (200), est logé dans le volume de logement (530) du récipient (500) avant production du champ magnétique tournant, dans lequel, de préférence, le volume de logement (530) est en outre fermé de manière préférablement étanche au moyen du couvercle (600).

15. Procédé selon la revendication 13 ou 14, dans lequel l'élément de tige (300) tourne autour de l'axe longitudinal (LA) par rapport au porte-échantillons (200), pendant que le porte-échantillons (200) est de préférence fixé en rotation par rapport à l'axe longitudinal (LA) au moyen de la zone de blocage (400),
dans lequel un liquide de charge (550) est en outre introduit dans le récipient (500), les récipients à échantillon (220) s'engageant au moins en partie dans celui-ci, dans lequel, de préférence, la section d'agitation mécanique est en outre agencée dans le liquide de charge (550), de sorte que le liquide de charge (550) est agité lors d'une rotation (P1) de l'élément de tige (300) autour de l'axe longitudinal (LA).
